# EUROPEAN PATENT SPECIFICATION

(11) **EP 2 673 484 B1**
(45) Date of publication and mention of the grant of the patent: **26.08.2015**
(21) Application number: 12706875.7
(22) Date of filing: 01.02.2012
(51) Int. Cl.: F01N 3/10, F02B 37/00, F01N 13/10, F01N 3/20

(54) **EXHAUST GAS RECEIVER, INTERNAL COMBUSTION ENGINE AND METHOD FOR SELECTIVE CATALYTIC REDUCTION**
ABGASSAMMLER, BRENNKRAFTMASCHINE UND VERFAHREN ZUR SELEKTIVEN KATALYTISCHEN REDUKTION
COLLECTEUR DE GAZ D'ÉCHAPPEMENT, MOTEUR À COMBUSTION INTERNE ET PROCÉDÉ PERMETTANT UNE RÉDUCTION CATALYTIQUE SÉLECTIVE

(30) Priority: 10.02.2011 FI 20115130
(43) Date of publication of application: 18.12.2013
(73) Proprietor: Wärtsilä Finland Oy, 65380 Vaasa (FI)
(72) Inventor: SADINMÄKI, Jukka, 80330 Joensuu (FI); SUOMINEN, Ari, FI-20660 Llttoinen (FI); SOLLA, Anu, CH-8400 Winterthur (CH); WIDJESKOG, Klaus, FI-65730 Jungsund (FI)
(74) Representative: Berggren Oy Ab
(86) International application number: PCT/FI2012/050088
(87) International publication number: WO 2012/107637

(56) References cited:
- WO-A1-2008/020207
- WO-A1-2011/000685
- JP-A- 6 272 539

## Description

### Technical field of the invention

The present invention relates to an exhaust gas receiver according to the preamble of claim 1. The invention also concerns an internal combustion engine and a method for selective catalytic reduction of exhaust gases of an internal combustion engine, as defined in the preambles of the other independent claims.

### Background of the invention

Nitrogen oxide (NOx) emissions of internal combustion engines in ships and power plants are a growing concern and subject to continuously tightening regulations set by the International Maritime Organization (IMO) and other legislative bodies. To a certain extent, the requirements set by different regulations can be met by means that are directly related to the operation of the engine, such as exhaust gas recirculation, high fuel injection pressures in diesel engines, water injection into the air intake duct etc. However, many engine-related measures for reducing NOx emissions have a negative effect on the fuel efficiency, and they are not adequate for meeting the most stringent emission limits. For ultimate NOx reduction, selective catalytic reduction (SCR) is needed. With the SCR, NOx reductions of up to 90% or even greater can be achieved.

In an SCR system a catalyst material and a reducing agent are used to decompose the NOx formed during the combustion back to the basic elements. In a typical SCR system, the catalyst is arranged on the surface of a supporting ceramic material forming a honeycomb structure inside a reactor. On the surface of the catalyst, the NOx reacts with ammonia that is used as the reducing agent and nitrogen and water is formed. In practice, urea is often used instead of ammonia for safety reasons. This applies especially to the marine applications, where leaking ammonia is a serious hazard. Urea is injected into the exhaust gas flow in an aqueous solution. Due to the high temperature of the exhaust gas, water evaporates and the urea molecules break up into ammonia and carbon dioxide.

A typical SCR system comprises a urea tank, from which the urea solution is delivered by means of a pumping unit. A dosing unit is used to provide the correct urea solution flow rate for injection. The urea solution is injected into the exhaust gas duct by means of an injection unit. An often used injection unit type comprises two coaxial pipes, of which the inner one is for the urea solution and the outer one for compressed air that is mixed with the urea solution in a nozzle to form a fine spray that mixes with the exhaust gas flow. An alternative solution is to use high-pressure urea injection without air-assisting.

For effective NOx reduction and minimized usage of urea, as well as for minimum ammonia slip through the SCR system, effective mixing of the urea with the exhaust gas flow is essential. In many prior art solutions, sufficient mixing has been ensured by arranging a relatively long exhaust duct section between the point of urea injection and the catalyst elements. However, this sets limitations for the construction of the exhaust system. Especially in ships, where the available space is limited, it is desirable that the exhaust system requires as little space as possible. In addition, if the catalytic converter is placed far from the engine, low temperature of the exhaust gases may have a negative effect on the functioning of the catalytic converter.

WO 2008/020207 A1 discloses an arrangement for reducing nitrogen oxides by selective catalytic reduction. The arrangement comprises a device for generating gaseous hydrolysis product comprising ammonia from an aqueous solution of urea. The device comprises a reaction vessel that is located in, or immediately adjacent to, an exhaust manifold for heating the urea solution by means of exhaust gas.

WO 2011/000685 A1 discloses a device for cleaning an exhaust gas stream containing NOx. Reactant is introduced into the exhaust gas stream via a channel that is arranged in an exhaust duct so that the reactant can be heated by means of the exhaust gas.

### Summary of the invention

The object of the present invention is to provide an improved exhaust gas receiver that facilitates the mixing of reducing agent with exhaust gases of an internal combustion engine. The characterizing features of the exhaust gas receiver according to the present invention are given in the characterizing part of claim 1. Another object of the present invention is to provide an improved internal combustion engine and a method for selective catalytic reduction of exhaust gases of an internal combustion engine. The characterizing features of the internal combustion engine and the method according to the present invention are given in the characterizing parts of the other independent claims.

According to the present invention, the exhaust gas receiver that is connectable to an internal combustion engine for receiving exhaust gases from the engine comprises a receiver chamber, at least one exhaust inlet, at least one exhaust outlet, and a reducing agent duct, at least a portion of the reducing agent duct being arranged inside the receiver chamber for heating the reducing agent before the reducing agent is mixed with the exhaust gases.

According to the present invention, in the method for selective catalytic reduction of exhaust gases of an internal combustion engine, reducing agent is mixed with exhaust gases of the engine, and the mixture of the reducing agent and the exhaust gases is guided through a catalyst element. Before being mixed with the exhaust gases, the reducing agent is heated in a receiver chamber of an exhaust gas receiver.

The invention has several advantages. When the reducing agent is heated in the exhaust gas receiver before being mixed with exhaust gases, good mixing can be achieved even when the mixing distance is short. The size and weight of the SCR system can consequently be substantially reduced. Due to the effective mixing, also the catalyst elements that are used for selective catalytic reduction can be arranged before turbochargers.

According to an embodiment of the invention, the exhaust gas receiver comprises means for injecting reducing agent into the exhaust gas receiver. If the injection nozzles are integrated with the exhaust gas receiver, a modular structure can be achieved.

According to an embodiment of the invention, the means for injecting reducing agent are arranged to inject the reducing agent into the receiver chamber.

According to an embodiment of the invention, the means for injecting reducing agent are arranged to inject the reducing agent into the exhaust inlet. If the means for injecting the reducing agent are arranged in the exhaust inlet, the mixing distance can be maximized.

According to an embodiment of the invention, the means for injecting reducing agent are connected to the reducing agent duct with first connecting ducts that are arranged inside the exhaust gas receiver. When the first connecting ducts are arranged inside the exhaust gas receiver, heat transfer from the exhaust gases to the reducing agent can be increased.

According to an embodiment of the invention, the exhaust gas receiver comprises a pressure medium duct supplying pressure medium for facilitating the injection of the reducing agent, and at least a portion of the pressure medium duct is arranged inside the receiver chamber for heating the pressure medium. By mixing the reducing agent with for instance pressurized air, the reducing agent mixes even better with the exhaust gases. Heating of the pressurized air helps to vaporize the water in the reducing agent solution and to break the urea molecules.

According to an embodiment of the invention, the pressure medium duct is connected to the means for injecting reducing agent with second connecting ducts that are arranged inside the exhaust gas receiver. When the second connecting ducts are arranged inside the exhaust gas receiver, heat transfer from the exhaust gases to the pressure medium can be increased.

According to an embodiment of the invention, a mixing chamber is arranged inside the receiver chamber. Inside the mixing chamber, the reducing agent can be mixed with a smaller amount of exhaust gases before being introduced into the receiver chamber.

According to an embodiment of the invention, the mixing chamber comprises apertures opening into the receiver chamber. According to another embodiment of the invention, the exhaust gas receiver comprises a fan or compressor for introducing exhaust gas into the mixing chamber. According to another embodiment of the invention, the exhaust gas receiver comprises means for injecting reducing agent into the mixing chamber. From the mixing chamber, the reducing agent and exhaust gases can be introduced through the apertures into the receiver chamber by the pressure difference between the chambers. The fan or compressor facilitates the exhaust gas flow into the mixing chamber and also out of the chamber.

According to an embodiment of the invention, a catalyst element is arranged inside the receiver chamber. When the catalyst element is arranged inside the receiver chamber, no separate reactor is needed for the catalyst elements and a compact SCR arrangement can be achieved. The selective catalytic reduction can also take place immediately after the engine before any turbocharger.

According to an embodiment of the invention, the exhaust outlet of the exhaust gas receiver is connectable to a turbocharger.

The internal combustion engine according to the present invention comprises an exhaust gas receiver defined above, the exhaust gas receiver being connected to the engine for receiving exhaust gases from the engine.

According to an embodiment of the invention, in the method for selective catalytic reduction the reducing agent is heated by guiding it through a reducing agent duct that is arranged at least partly inside the receiver chamber of the exhaust gas receiver.

According to an embodiment of the invention, the reducing agent is injected into the exhaust inlets of the exhaust gas receiver.

According to an embodiment of the invention, the reducing agent is mixed with exhaust gases in a mixing chamber that is arranged inside the receiver chamber.

According to an embodiment of the invention, the injection of the reducing agent is facilitated by pressure medium, and the pressure medium is heated in the receiver chamber before being mixed with the reducing agent.

According to an embodiment of the invention, the mixture of the exhaust gases and the reducing agent is guided through a catalyst element that is arranged inside the receiver chamber.

### Brief description of the drawings

Fig. 1 shows an internal combustion engine with an exhaust gas receiver.
Fig. 2 shows an exhaust gas receiver according to an embodiment of the invention.
Fig. 3 shows a partially cross-sectional view of an exhaust gas receiver according to another embodiment of the present invention.
Fig. 4 shows a partially cross-sectional view of an exhaust gas receiver according to a third embodiment of the invention.
Fig. 5 shows a partially cross-sectional view of an exhaust gas receiver according to a fourth embodiment of the invention.
Fig. 6 shows a partially cross-sectional view of an exhaust gas receiver according to a fifth embodiment of the invention.
Fig. 7 shows a partially cross-sectional view of an exhaust gas receiver according to a sixth embodiment of the invention.
Fig. 8 shows a cross-sectional view of an exhaust gas receiver according to a seventh embodiment of the present invention.
Fig. 9 shows a cross-sectional view of an exhaust gas receiver according to an eight embodiment of the present invention.
Fig. 10 shows a cross-sectional view of an exhaust gas receiver according to a ninth embodiment of the present invention.

### Detailed description of the invention

Embodiments of the present invention are now described in more detail with reference to the accompanying drawings.

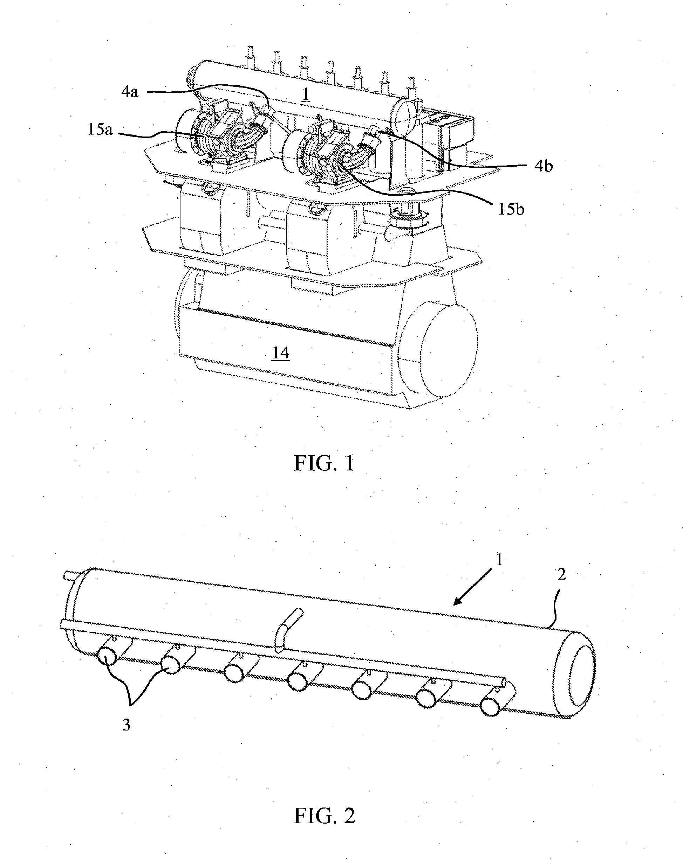

In figure 1 is shown an internal combustion engine 14 that is provided with an exhaust gas receiver 1 for receiving exhaust gases from the engine 14. The exhaust gas receiver 1 is arranged on top of the engine 14 so that the longitudinal axis of the exhaust gas receiver 1 is parallel to the longitudinal axis of the engine 14. The engine 14 of figure 1 is a large two-stroke internal combustion engine comprising seven cylinders that are arranged inline. However, the invention is not limited to two-stroke engines or to engines with a certain cylinder configuration or number of cylinders, but can also be applied to four-stroke engines and for instance to engines where the cylinders are arranged in a V-configuration. Although the invention is particularly advantageous when used with ship engines, it can also be applied for instance to engines that are used at power plants. The engine 14 is provided with two turbochargers 15a, 15b that are connected to exhaust outlets 4a, 4b of the exhaust gas receiver 1. The number of the exhaust outlets 4 and turbochargers 15 can vary for instance based on the number of cylinders in the engine 14. In figure 1 is shown two turbochargers 15a, 15b that are arranged in parallel, but the engine 14 could also be provided with two-stage turbocharging, where two turbochargers are arranged in series.

Exhaust gas receivers 1 according to different embodiments of the present invention are shown in figures 2-10. The exhaust gas receiver 1 comprises an elongated cylindrical receiver chamber 2, exhaust inlets 3 and exhaust outlets 4. In the embodiments of the figures, the number of the exhaust inlets 3 equals the number of the cylinders of the engine 14. However, also other arrangements are possible. Instead of having one exhaust inlet 3 for each cylinder of the engine 14, the cylinders of the engine 14 could be connected to a common duct that is connected to one or more exhaust inlet 3 of the exhaust gas receiver 1. Alternatively, for instance in a V-engine, the engine could be provided with one exhaust gas receiver 1 for each bank of the engine and both exhaust gas receivers 1 would comprise one exhaust inlet 3 for each cylinder of the corresponding bank of the engine.

For facilitating the mixing of reducing agent with exhaust gases of the engine 14 before selective catalytic reduction, the reducing agent is heated in the exhaust gas receiver 1 before being mixed with the exhaust gases. The reducing agent can be for instance ammonia that is delivered in the form of a urea-water solution. For heating the reducing agent, part of a reducing agent duct 5 is arranged inside the receiver chamber 2 of the exhaust gas receiver 1. When the reducing agent flows in the reducing agent duct 5 inside the receiver chamber 2, hot exhaust gases heat the reducing agent. The length of the portion of the reducing agent duct 5 that is inside the receiver chamber 2 is chosen so that sufficient temperature of the reducing agent is achieved. The needed temperature depends for instance on the type of the reducing agent and the distance between the reducing agent injection point and catalyst elements. The achieved temperature depends for instance on the flow speed of the reducing agent and the exhaust gas temperature in the receiver chamber 2.

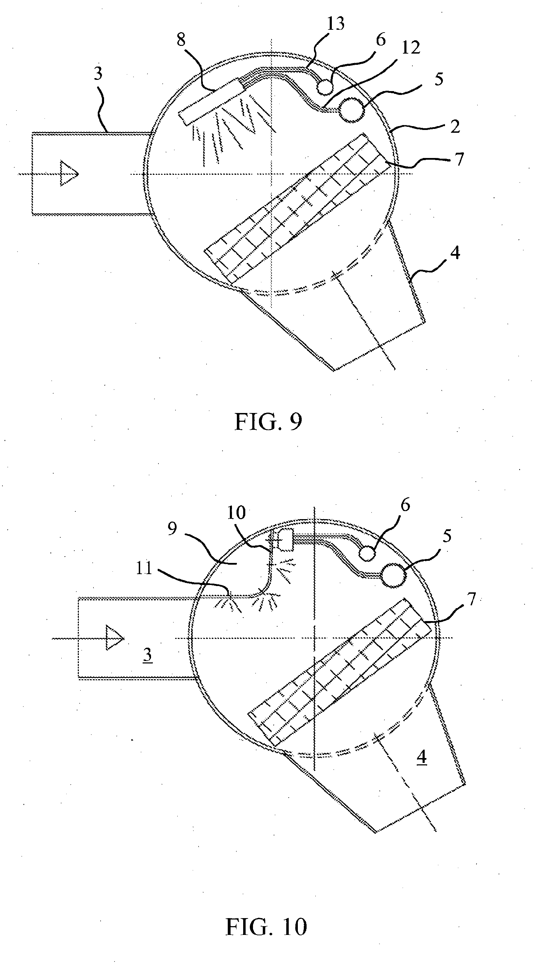

The reducing agent is injected into the exhaust gas receiver 1 through nozzles 8. In the embodiments of figures 2-8, the reducing agent is injected into the exhaust inlets 3 of the exhaust gas receiver 1. In the embodiment of figure 9, the reducing agent is injected into the receiver chamber 2 of the exhaust gas receiver 1. In the embodiment of figure 10, the reducing agent is injected into a mixing chamber 9. The mixing chamber 9 is arranged inside the receiver chamber 2 and it is separated with a wall 10 from the receiver chamber 2. The mixing chamber 9 could also be a separate chamber outside the exhaust gas receiver 1. The wall 10 of the mixing chamber 9 is provided with holes 11, through which the reducing agent that is mixed with exhaust gases can be introduced into the receiver chamber 2. The exhaust gas receiver 1 can be provided with a fan or compressor that is used to introduce exhaust gases into the mixing chamber 9. When part of the exhaust gases of the engine 14 are introduced into the mixing chamber 9 together with the preheated reducing agent, temperature of the reducing agent is further increased.

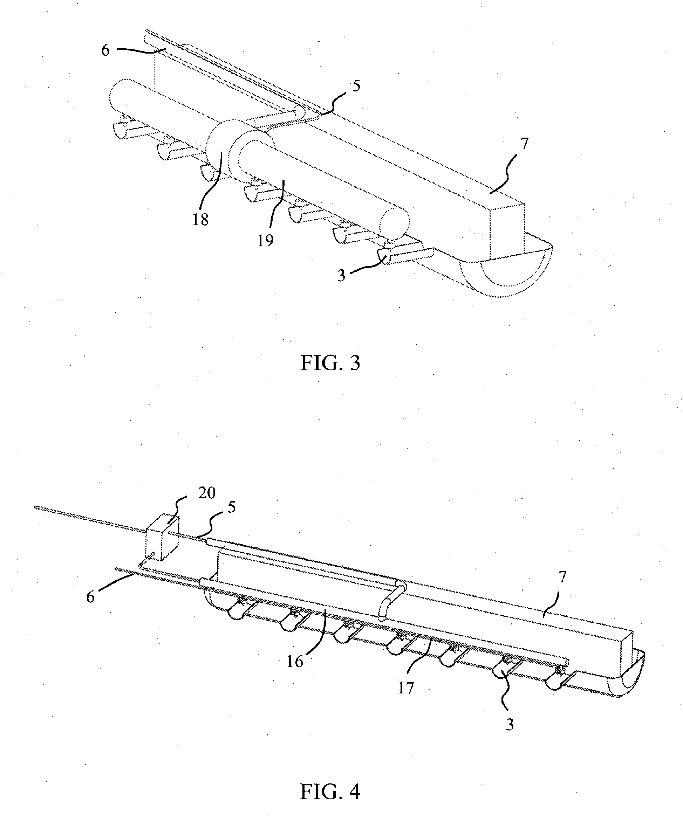

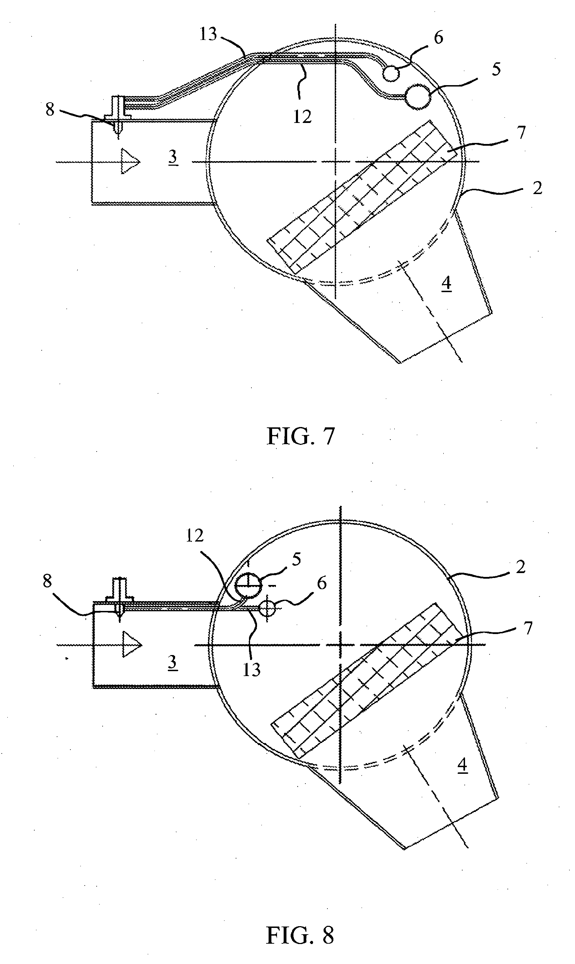

To further facilitate the mixing of the reducing agent with the exhaust gases, the reducing agent can be mixed in the nozzles 8 with pressurized air. The pressurized air is introduced into the nozzles 8 through a pressure medium duct 6. Also the pressure medium duct 6 can be arranged partly inside the receiver chamber 2 of the exhaust gas receiver 1, as shown in figures 3, 5 and 7-10. The nozzles 8 are connected to the reducing agent duct 5 with a first connecting duct 12 and to the pressure medium duct 6 with a second connecting duct 13. In the embodiments of figures 7-10, each nozzle 8 is connected with its own connecting ducts 12, 13 to the reducing agent duct 5 and the pressure medium duct 6. In the embodiments of figures 2 and 4-6, the nozzles 8 are connected to a reducing agent distribution duct 16 and to a pressure medium distribution duct 17. The connecting ducts 12, 13 can be arranged either inside the exhaust gas receiver 1, as shown in figures 8-10, or at least partly outside the exhaust gas receiver 1, as shown in figure 7. If the connecting ducts 12, 13 are arranged inside the exhaust gas receiver 1, the temperature of the reducing agent and pressurized air can be increased more than in the arrangement where the connecting ducts 12, 13 are outside the receiver chamber 2. The distribution ducts 16, 17 and the connecting ducts 12, 13 can be insulated if they are arranged outside the exhaust gas receiver 1.

In the embodiment of figure 3, the reducing agent duct 5 and the pressure medium duct 6 are connected to a gasifier 18 that is outside the exhaust gas receiver 1. In the gasifier 18, the reducing agent and the pressure medium are mixed. The pressure medium can be air or some other gas, such as exhaust gas from the engine 14. From the gasifier 18, the reducing agent and the pressure medium are introduced into a feeding duct 19 where the mixture evaporates. The feeding duct 19 is outside the exhaust gas receiver 1 and accommodates the nozzles 8 that are used to inject the reducing agent into the exhaust inlets 3 of the exhaust gas receiver 1. In this embodiment, an insulating layer is arranged around the feeding duct 19. The feeding duct 19 could also be arranged inside the receiver chamber 2.

According to an embodiment of the invention, a catalyst element 7 is arranged inside the receiver chamber 2, as can be seen in figures 3-10. With this arrangement, no separate reactor is needed for the catalyst elements 7 and the whole SCR process takes place inside the exhaust gas receiver 1. Alternatively, the catalyst elements 7 can be arranged in a separate reactor that is located close to the exhaust gas receiver 1.

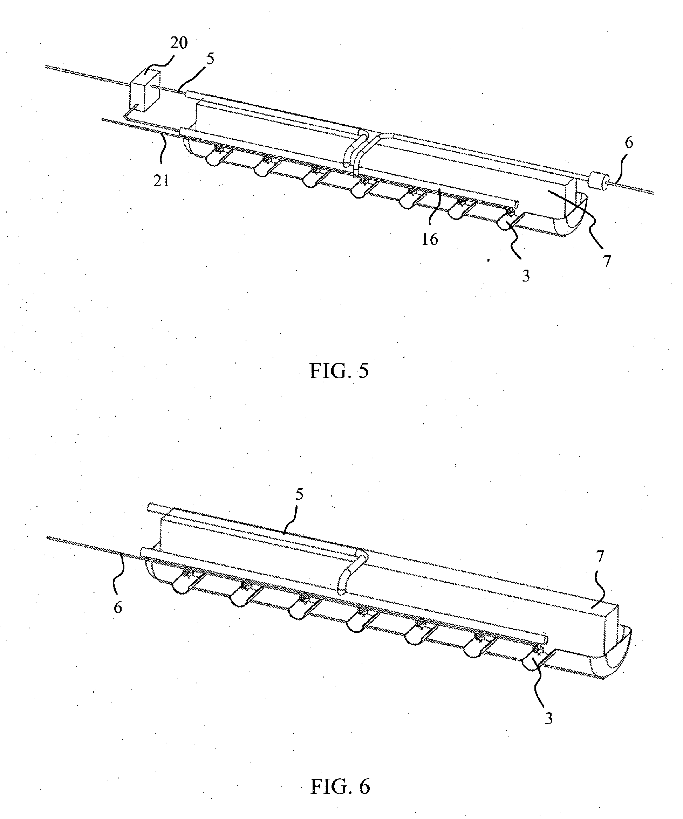

In the embodiments of figures 4 and 5, the SCR arrangement is provided with a pumping unit 20 that circulates the reducing agent inside the receiver chamber 2 keeping it at the optimal temperature. In figure 5 is also shown a control air duct 21 that is used to supply pressurized air for opening dosing valves that control the injection of the reducing agent.

It will be appreciated by a person skilled in the art that the invention is not limited to the embodiments described above, but may vary within the scope of the appended claims. For instance, features of the different embodiments can be combined.

## Claims

1. An exhaust gas receiver (1) that is connectable to an internal combustion engine (14) for receiving exhaust gases from the engine (14), the exhaust gas receiver (1) comprising a receiver chamber (2), at least one exhaust inlet (3), at least one exhaust outlet (4, 4a, 4b) and a reducing agent duct (5), at least a portion of the reducing agent duct (5) being arranged inside the receiver chamber (2) for heating the reducing agent before the reducing agent is mixed with the exhaust gases, **characterized in that** a catalyst element (7) is arranged inside the receiver chamber (2).

2. An exhaust gas receiver (1) according to claim 1, **characterized in that** the exhaust gas receiver (1) comprises means (8) for injecting reducing agent into the exhaust gas receiver (1).

3. An exhaust gas receiver (1) according to claim 2, **characterized in that** the means (8) for injecting reducing agent are arranged to inject the reducing agent into the receiver chamber (2).

4. An exhaust gas receiver (1) according to claim 2, **characterized in that** the means (8) for injecting reducing agent are arranged to inject the reducing agent into the exhaust inlet (3).

5. An exhaust gas receiver (1) according to claim 3 or 4, **characterized in that** the means (8) for injecting reducing agent are connected to the reducing agent duct (5) with first connecting ducts (12) that are arranged inside the exhaust gas receiver (1).

6. An exhaust gas receiver (1) according to any of claims 1-5, **characterized in that** the exhaust gas receiver (1) comprises a pressure medium duct (6) supplying pressure medium for facilitating the injection of the reducing agent, and at least a portion of the pressure medium duct (6) is arranged inside the receiver chamber (2) for heating the pressure medium.

7. An exhaust gas receiver (1) according to claim 6, **characterized in that** the pressure medium duct (6) is connected to the means (8) for injecting reducing agent with second connecting ducts (13) that are arranged inside the exhaust gas receiver (1).

8. An exhaust gas receiver (1) according to any of the preceding claims, **characterized in that** a mixing chamber (9) is arranged inside the receiver chamber (2).

9. An exhaust gas receiver (1) according to claim 8, **characterized in that** the mixing chamber (9) comprises apertures (11) opening into the receiver chamber (2).

10. An exhaust gas receiver (1) according to claim 8 or 9, **characterized in that** the exhaust gas receiver (1) comprises a fan or compressor for introducing exhaust gas into the mixing chamber (9).

11. An exhaust gas receiver (1) according to any of claim 8-10, **characterized in that** the exhaust gas receiver (1) comprises means (8) for injecting reducing agent into the mixing chamber (9).

12. An exhaust gas receiver (1) according to any of the preceding claims, **characterized in that** the exhaust outlet (4, 4a, 4b) of the exhaust gas receiver (1) is connectable to a turbocharger (15a, 15b).

13. An internal combustion engine (14), **characterized in that** the engine (14) comprises an exhaust gas receiver (1) according to any of claims 1-12, the exhaust gas receiver (1) being connected to the engine (14) for receiving exhaust gases from the engine (14).

14. A method for selective catalytic reduction of exhaust gases of an internal combustion engine (14), in which method reducing agent is mixed with exhaust gases of the engine (14), and the mixture of the reducing agent and the exhaust gases is guided through a catalyst element (7), the reducing agent being heated in a receiver chamber (2) of an exhaust gas receiver (2) before being mixed with the exhaust gases, **characterized in that** the mixture of the exhaust gases and the reducing agent is guided through a catalyst element (7) that is arranged inside the receiver chamber (2).

15. A method according to claim 14, **characterized in that** the reducing agent is heated by guiding it through a reducing agent duct (5) that is arranged at least partly inside the receiver chamber (2) of the exhaust gas receiver (1).

## Patentansprüche

1. Abgassammler (1), welcher mit einer Brennkraftmaschine (14) verbindbar ist, zum Aufnehmen von Abgasen von der Kraftmaschine (14), wobei der Abgassammler (1) eine Sammlerkammer (2), wenigstens einen Abgaseinlass (3), wenigstens einen Abgasauslass (4, 4a, 4b) und einen Reduktionsmittelkanal (5) umfasst, wobei wenigstens ein Abschnitt des Reduktionsmittelkanals (5) innerhalb der Sammlerkammer (2) angeordnet ist, um das Reduktionsmittel zu erwärmen, bevor das Reduktionsmittel mit den Abgasen gemischt wird, **dadurch gekennzeichnet, dass** ein Katalysatorelement (7) innerhalb der Sammlerkammer (2) angeordnet ist.

2. Abgassammler (1) nach Anspruch 1, **dadurch gekennzeichnet, dass** der Abgassammler (1) Mittel (8) zum Einspritzen von Reduktionsmittel in den Abgassammler (1) umfasst.

3. Abgassammler (1) nach Anspruch 2, **dadurch gekennzeichnet, dass** die Mittel (8) zum Einspritzen von Reduktionsmittel dafür eingerichtet sind, das Reduktionsmittel in die Sammlerkammer (2) einzuspritzen.

4. Abgassammler (1) nach Anspruch 2, **dadurch gekennzeichnet, dass** die Mittel (8) zum Einspritzen von Reduktionsmittel dafür eingerichtet sind, das Reduktionsmittel in den Abgaseinlass (3) einzuspritzen.

5. Abgassammler (1) nach Anspruch 3 oder 4, **dadurch gekennzeichnet, dass** die Mittel (8) zum Einspritzen von Reduktionsmittel mit dem Reduktionsmittelkanal (5) mittels erster Verbindungskanäle (12) verbunden sind, welche innerhalb des Abgassammlers (1) angeordnet sind.

6. Abgassammler (1) nach einem der Ansprüche 1-5, **dadurch gekennzeichnet, dass** der Abgassammler (1) einen Druckmittelkanal (6) umfasst, der Druckmittel zuführt, um die Einspritzung des Reduktionsmittels zu erleichtern, und wenigstens ein Abschnitt des Druckmittelkanals (6) innerhalb der Sammlerkammer (2) angeordnet ist, um das Druckmittel zu erwärmen.

7. Abgassammler (1) nach Anspruch 6, **dadurch gekennzeichnet, dass** der Druckmittelkanal (6) mit den Mitteln (8) zum Einspritzen von Reduktionsmittel mittels zweiter Verbindungskanäle (13) verbunden sind, welche innerhalb des Abgassammlers (1) angeordnet sind.

8. Abgassammler (1) nach einem der vorhergehenden Ansprüche, **dadurch gekennzeichnet, dass** eine Mischkammer (9) innerhalb der Sammlerkammer (2) angeordnet ist.

9. Abgassammler (1) nach Anspruch 8, **dadurch gekennzeichnet, dass** die Mischkammer (9) Öffnungen (11) umfasst, welche in die Sammlerkammer (2) münden.

10. Abgassammler (1) nach Anspruch 8 oder 9, **dadurch gekennzeichnet, dass** der Abgassammler (1) einen Ventilator oder Verdichter zum Einleiten von Abgas in die Mischkammer (9) umfasst.

11. Abgassammler (1) nach einem der Ansprüche 8-10, **dadurch gekennzeichnet, dass** der Abgassammler (1) Mittel (8) zum Einspritzen von Reduktionsmittel in die Mischkammer (9) umfasst.

12. Abgassammler (1) nach einem der vorhergehenden Ansprüche, **dadurch gekennzeichnet, dass** der Abgasauslass (4, 4a, 4b) des Abgassammlers (1) mit einem Turbolader (15a, 15b) verbindbar ist.

13. Brennkraftmaschine (14), **dadurch gekennzeichnet, dass** die Kraftmaschine (14) einen Abgassammler (1) nach einem der Ansprüche 1 bis 12 umfasst, wobei der Abgassammler (1) mit der Kraftmaschine (14) verbunden ist, um Abgase von der Kraftmaschine (14) aufzunehmen.

14. Verfahren zur selektiven katalytischen Reduktion von Abgasen einer Brennkraftmaschine (14), wobei bei diesem Verfahren Reduktionsmittel mit Abgasen der Kraftmaschine (14) gemischt wird und die Mischung des Reduktionsmittels und der Abgase durch ein Katalysatorelement (7) geleitet wird, wobei das Reduktionsmittel in einer Sammlerkammer (2) eines Abgassammlers (1) erwärmt wird, bevor es mit den Abgasen gemischt wird, **dadurch gekennzeichnet, dass** die Mischung der Abgase und des Reduktionsmittels durch ein Katalysatorelement (7) geleitet wird, welches innerhalb der Sammlerkammer (2) angeordnet ist.

15. Verfahren nach Anspruch 14, **dadurch gekennzeichnet, dass** das Reduktionsmittel erwärmt wird, indem es durch einen Reduktionsmittelkanal (5) geleitet wird, welcher wenigstens teilweise innerhalb der Sammlerkammer (2) des Abgassammlers (1) angeordnet ist.

## Revendications

1. Collecteur de gaz d'échappement (1) qui peut être raccordé à un moteur à combustion interne (14) pour recevoir les gaz d'échappement du moteur (14), ledit collecteur de gaz d'échappement (1) comprenant une chambre de collecteur (2), au moins une arrivée d'échappement (3), au moins une sortie d'échappement (4, 4a, 4b) et un conduit d'agent de réduction (5), au moins une section de conduit d'agent de réduction (5) étant disposée à l'intérieur de la chambre de collecteur (2) pour chauffer l'agent de réduction avant que l'agent de réduction soit mélangé aux gaz d'échappement, **caractérisé en ce qu'**un élément catalytique (7) est disposé à l'intérieur de la chambre de collecteur (2).

2. Collecteur de gaz d'échappement (1) selon la revendication 1, **caractérisé en ce que** le collecteur de gaz d'échappement (1) comprend un moyen (8) pour injecter un agent de réduction dans le collecteur de gaz d'échappement (1).

3. Collecteur de gaz d'échappement (1) selon la revendication 2, **caractérisé en ce que** le moyen (8) pour injecter l'agent de réduction est disposé pour injecter l'agent de réduction dans la chambre de collecteur (2).

4. Collecteur de gaz d'échappement (1) selon la revendication 2, **caractérisé en ce que** le moyen (8) pour injecter l'agent de réduction est disposé pour injecter l'agent de réduction dans l'arrivée d'échappement (3).

5. Collecteur de gaz d'échappement (1) selon la revendication 3 ou 4, **caractérisé en ce que** le moyen (8) pour injecter l'agent de réduction est raccordé au conduit d'agent de réduction (5) avec des premiers conduits de raccord (12) qui sont disposés à l'intérieur du collecteur de gaz d'échappement (1).

6. Collecteur de gaz d'échappement (1) selon l'une quelconque des revendications 1-5, **caractérisé en ce que** le collecteur de gaz d'échappement (1) comprend un conduit de milieu sous pression (6) fournissant un milieu sous pression pour faciliter l'injection de l'agent de réduction et au moins une section du conduit de milieu sous pression (6) est disposée à l'intérieur de la chambre de collecteur (2) pour chauffer le milieu sous pression.

7. Collecteur de gaz d'échappement (1) selon la revendication 6, **caractérisé en ce que** le conduit de milieu sous pression (6) est raccordé au moyen (8) pour injecter un agent de réduction avec des deuxièmes conduits de raccord (13) qui sont disposés à l'intérieur du collecteur de gaz d'échappement (1).

8. Collecteur de gaz d'échappement (1) selon l'une quelconque des revendications précédentes, **caractérisé en ce qu'**une chambre de mélange (9) est disposée à l'intérieur de la chambre de collecteur (2).

9. Collecteur de gaz d'échappement (1) selon la revendication 8, **caractérisé en ce que** la chambre de mélange (9) comprend des ouvertures (11) s'ouvrant dans la chambre de collecteur (2).

10. Collecteur de gaz d'échappement (1) selon la revendication 8 ou 9, **caractérisé en ce que** le collecteur de gaz d'échappement (1) comprend un ventilateur ou compresseur pour introduire les gaz d'échappement dans la chambre de mélange (9).

11. Collecteur de gaz d'échappement (1) selon l'une quelconque des revendications 8-10, **caractérisé en ce que** le collecteur de gaz d'échappement (1) comprend un moyen (8) pour injecter un agent de réduction dans la chambre de mélange (9).

12. Collecteur de gaz d'échappement (1) selon l'une quelconque des revendications précédentes, **caractérisé en ce que** la sortie d'échappement (4, 4a, 4b) du collecteur de gaz d'échappement (1) peut être raccordée à un turbocompresseur (15a, 15b).

13. Moteur à combustion interne (14), **caractérisé en ce que** le moteur (14) comprend un collecteur de gaz d'échappement (1) selon l'une quelconque des revendications 1-12, ledit collecteur de gaz d'échappement (1) étant raccordé au moteur (14) pour recevoir les gaz d'échappement du moteur (14).

14. Méthode pour la réduction catalytique sélective des gaz d'échappement d'un moteur à combustion interne (14), méthode dans laquelle un agent de réduction est mélangé aux gaz d'échappement du moteur (14) et le mélange de l'agent de réduction et des gaz d'échappement est guidé à travers un élément catalyseur (7), l'agent de réduction étant chauffé dans une chambre de collecteur (2) d'un collecteur de gaz d'échappement (1) avant d'être mélangé aux gaz d'échappement, **caractérisée en ce que** le mélange des gaz d'échappement et de l'agent de réduction est guidé à travers un élément catalyseur (7) qui est disposé à l'intérieur de la chambre de collecteur (2).

15. Méthode selon la revendication 14, **caractérisée en ce que** l'agent de réduction est chauffé en le guidant à travers un conduit d'agent de réduction (5) qui est disposé au moins en partie à l'intérieur de la chambre de collecteur (2) du collecteur de gaz d'échappement (1).
